# EUROPEAN PATENT SPECIFICATION

(11) **EP 4 044 402 B1**
(45) Date of publication and mention of the grant of the patent: **28.02.2024**
(21) Application number: 20873868.2
(22) Date of filing: 08.10.2020
(51) Int. Cl.: H02K 1/14, H02K 1/22, H02K 29/03

(54) **MOTOR**
MOTOR
MOTEUR

(30) Priority: 10.10.2019 KR 20190125392
(43) Date of publication of application: 17.08.2022
(73) Proprietor: LG Innotek Co., Ltd., Seoul 07796 (KR)
(72) Inventor: RYU, Byeong Jong, Seoul 07796 (KR); LEE, Tae Wook, Seoul 07796 (KR)
(74) Representative: M. Zardi & Co S.A.
(86) International application number: PCT/KR2020/013798
(87) International publication number: WO 2021/071315

(56) References cited:
- JP-A- 2003 032 923
- JP-A- 2003 032 923
- JP-A- 2006 211 828
- JP-A- 2013 258 822
- JP-A- 2013 258 822
- KR-B1- 101 940 682
- KR-B1- 101 940 682
- US-A1- 2015 084 444
- US-A1- 2018 198 343

## Description

### [Technical Field]

The present invention relates to a motor.

### [Background Art]

A motor includes a rotating shaft, a rotor, and a stator. The stator may include a stator core and coils wound around the stator core. A plurality of divided cores may be assembled to constitute the stator core. The plurality of divided cores are individually manufactured. The divided cores may be manufactured by stacking plates which are formed through a press machining process performed on boards.

The manufactured divided cores may be assembled in an annular shape to manufacture the stator core. The divided cores include yokes and teeth. When the divided cores are assembled, both side surfaces of the yokes are in contact with each other.

However, there is a tolerance between the divided cores manufactured through individual processes. Accordingly, when the divided cores are assembled, there is a problem that occurs when deviation of open slots between the teeth accumulates. Particularly, when the number of the divided cores constituting the stator core is large, the tolerance accumulates, the deviation between the open slots becomes large, and thus there is a problem of an increase in cogging torque. Motors with divided stator cores are disclosed in US 2018/0198343 A1, KR 10-1940682 B1 and JP 2013-258822 A.

### [Disclosure]

### [Technical Problem]

The present invention is directed to providing a motor which includes a stator core formed by assembling a plurality of divided cores and in which a cogging torque is reduced.

### [Technical Solution]

The invention is defined by the motor with the features of claim 1. Preferred embodiments are disclosed in the dependent claims.

All curvature centers of the outer surfaces of the plurality of yokes may be different.

All curvature centers of inner surfaces of the plurality of the teeth may be different.

All curvatures of the outer surfaces of the plurality of yokes may be the same, and all curvatures of inner surfaces of the plurality of teeth may be the same.

A radius of curvature of the outer surface of the yoke may be greater than an inner diameter of the housing.

An inner surface of the yoke may include a first surface and a second surface distinguished in a circumferential direction of the stator, the second surface may be obliquely disposed with respect to the first surface, and the first surface and the second surface may be flat surfaces.

The stator core may include a portion protruding further than a perfect circle having a radius from an axial center to the outer surface of the yoke.

The outer surfaces of the adjacent yokes may constitute a first corner.

The inner surfaces of the adjacent yokes may constitute a second corner.

### [Advantageous Effects]

According to embodiments, the present invention provides an advantageous effect of reducing a cogging torque by minimizing an accumulated tolerance to reduce a deviation between open slots when divided cores are assembled.

According to the embodiments, the present invention provides an advantageous effect of reducing the number of molds for manufacturing a stator core.

### [Description of Drawings]

FIG. 1 is a view illustrating a motor according to an embodiment.
FIG. 2 is a view illustrating a divided core constituting a stator core.
FIG. 3 (not showing an embodiment of the invention) is a view illustrating a board.
FIG. 4 (not showing an embodiment of the invention) is a view illustrating plates of the divided core and a plate of a rotor core formed when a press machining process is performed on the board of FIG. 3.
FIG. 5 is a view illustrating a manufacturing process of the stator core.
FIG. 6 is a plan view illustrating the stator core.
FIG. 7 is an enlarged view illustrating portion P1 of FIG. 6.
FIG. 8 is an enlarged view illustrating portion P2 of FIG. 6.
FIG. 9 is an enlarged view illustrating an inner surface of a yoke.

### [Modes of the Invention]

Hereinafter, exemplary embodiments of the present invention will be described in detail with reference to the accompanying drawings.

In addition, unless clearly and specifically defined otherwise by the context, all terms (including technical and scientific terms) used herein can be interpreted as having meanings generally understood by those skilled in the art, and meanings of generally used terms, such as those defined in commonly used dictionaries, will be interpreted in consideration of contextual meanings of the related art.

In addition, the terms used in the embodiments of the present invention are considered in a descriptive sense only and not to limit the present invention.

In the present specification, unless clearly indicated otherwise by the context, singular forms include the plural forms thereof, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" can be used.

The terms are only to distinguish one element from another element, and the essence, order, and the like of the elements are not limited by the terms.

In addition, it should be understood that, when an element is referred to as being "connected" or "coupled" to another element, such a description may include both a case in which the element is directly connected or coupled to another element, and a case in which the element is connected or coupled to another element with still another element disposed therebetween.

In addition, when any one element is described as being formed or disposed "on or under" another element, such a description includes both a case in which the two elements are formed or disposed in direct contact with each other and a case in which one or more other elements are interposed between the two elements. In addition, when one element is described as being formed "on or under" another element, such a description may include a case in which the one element is formed at an upper side or a lower side with respect to another element.

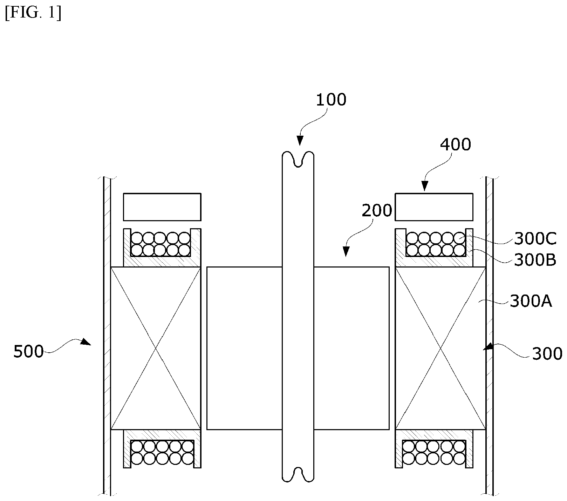

FIG. 1 is a view illustrating a motor according to an embodiment. Hereinafter, the term "inward" refers to a direction from a housing 500 toward a rotating shaft 100 which is a center of the motor, and the term "outward" refers to a direction opposite to "inward," that is a direction from the rotating shaft 100 toward the housing 500. In addition, a circumferential direction or radial direction is defined based on an axial center.

The rotating shaft 100 may be coupled to a rotor 200. When an electromagnetic interaction occurs between the rotor 200 and the stator 300 due to the supply of a current, the rotor 200 rotates, and the rotating shaft 100 rotates in conjunction with the rotor 200.

The rotor 200 rotates through the electrical interaction with the stator 300. The rotor 200 may be disposed inside the stator 300.

The stator 300 is disposed outside the rotor 200. The stator 300 may include a stator core 300A, insulators 300B installed on the stator core 300A, and coils 300C. The coils 300C may be wound around the insulators 300B. The insulators 300B are disposed between the coils 300C and the stator core 300A and serve to connect the stator core 300A and the coils 300C. The coils 300C may induce an electrical interaction with magnets of the rotor 200.

A busbar 400 is disposed at an upper side of the stator 300. The busbar 400 includes a busbar holder (not shown) formed of an insulating material and a plurality of terminals (not shown) coupled to the busbar holder. In this case, the busbar holder is formed of the insulating material to prevent the plurality of terminals from being connected. In addition, the plurality of terminals connect the coils 300C wound around the stator core 300A and allow a current to be supplied to the coils through the plurality of terminals.

The housing 500 accommodates the rotor 200 and the stator 300.

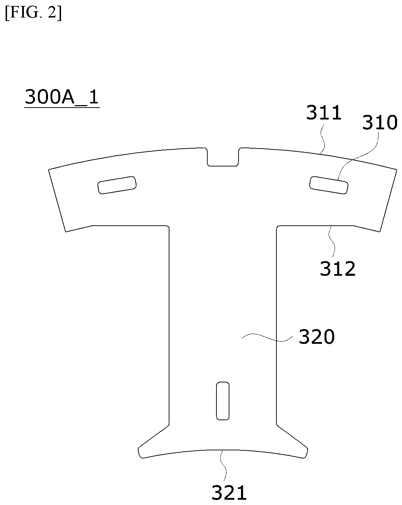

FIG. 2 is a view illustrating a divided core 300A_1 constituting the stator core 300A.

Referring to FIG. 2, the stator core 300A may be formed by combining a plurality of divided cores 300A_1. The divided core 300A_1 includes yoke 310 and a tooth 320. The yoke 310 includes an outer surface 311 and an inner surface 312. The yoke 310 is disposed relatively inward, and the tooth 320 is disposed relatively outward. The outer surface 311 may be in contact with an inner surface of the housing and have a curved surface. The inner surface 312 is a surface connected to the tooth 320 and has a flat surface or curved surface. The coil is wound around the tooth 320. An inner surfaces 312 of the tooth 320 is a surface facing the rotor. The inner surface of the tooth 320 may be a curved surface.

When the divided cores 300A_1 are assembled, side surfaces of the yokes 310 are in contact with each other, the outer surfaces 311 of the adjacent divided cores 300A_1 are connected, and the inner surfaces 312 of the divided cores 300A_1 are also connected.

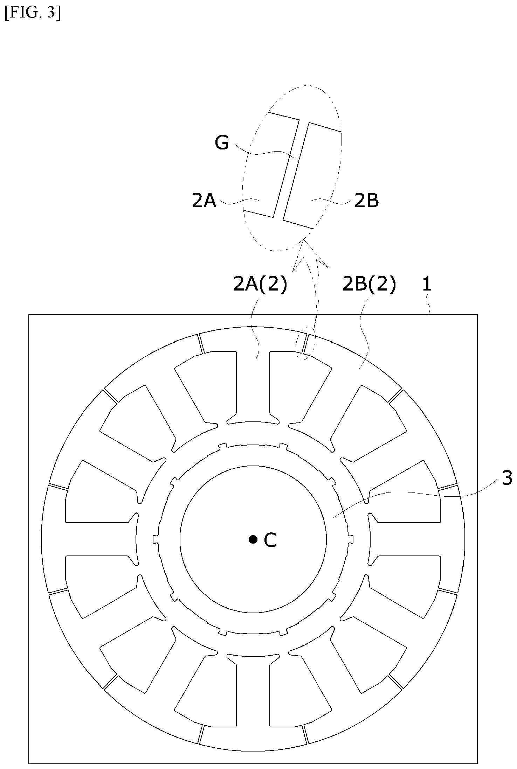

FIG. 3 is a view illustrating a board 1.

Referring to FIGS. 2 and 3, the divided core 300A_1 may be formed by stacking a plurality of plates 2. The plates 2 are manufactured by performing a press machining process on a board 1. In the plurality of divided cores 300A_1 to which the present invention is applied, the plates 2 manufactured from one board 1 are commonly used.

The plates 2 corresponding to the number of the divided cores 300A_1 constituting the stator core 300A are manufactured by performing a press machining process on the one board 1. Specifically, when the number of the divided cores 300A_1 constituting the stator core 300A is 12, 12 plates 2 are disposed in an annular shape around a center C of the board 1, and the press machining process is performed on the board 1.

In this example that forms not part of the invention, all of curvature centers of the outer surfaces 311 of the plates 2 manufactured from the board 1 are the same and coincide with the center C of the board 1. In addition, inner surfaces of the plates 2 stacked to constitute the inner surfaces 321 of the teeth 320 constitute a perfect circle around the center C of the board 1.

In this case, the press machining process is performed in a state in which gaps G are formed between one surfaces of plates 2A and 2B. In this case, one surfaces of plates 2 are both side surfaces of outer portions of the plates 2 which are stacked to form the yokes 310. All of the gaps G have the same sizes in the board 1.

Since a central portion of the board 1 is empty, the plates 3 constituting the rotor core may be manufactured by performing the press machining process. In this case (not forming part of the invention), a center C of the plate 3 coincides with the center C of the board 1 and also coincides with the curvature center of the outer surface 311 of the plate 2 constituting the divided core 300A 1.

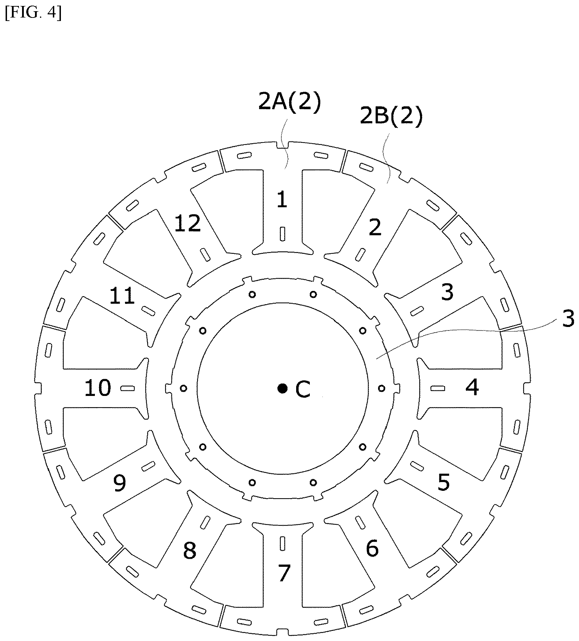

FIG. 4 (not showing an embodiment of the claims) is a view illustrating the plates 2 of the divided core 300A_1 and the plate 3 of the rotor core formed when the press machining process is performed on the board 1 of FIG. 3.

Referring to FIGS. 3 and 4, when a press machining process is performed on the board 1, 12 plates 2 constituting the divided cores 300A_1 are formed at the same time. The 12 plates 2 constitute different divided cores 300A_1. In this case, the curvature centers of the outer surfaces 311 of the 12 plates 2 are the same as a center C of FIG. 4. C of FIG. 4 is a center of the perfect circle and becomes an axial center C. Indexes may be marked on the 12 plates 2.

Meanwhile, the plates 3, which are stacked to form the rotor core, are manufactured.

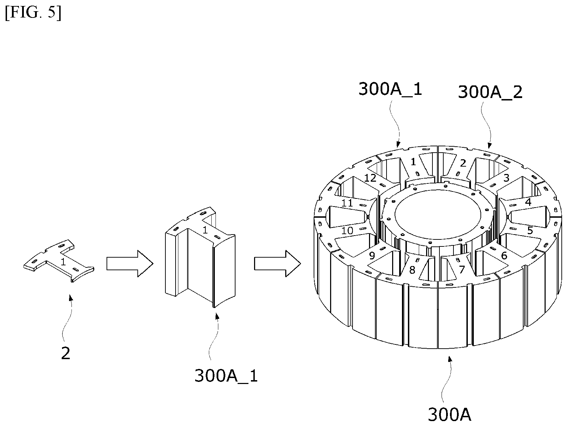

FIG. 5 is a view illustrating a manufacturing process of the stator core 300A.

Referring to FIGS. 4 and 5, after the plates 2 are formed from any one board 1, when a process of stacking plates 2 formed from another board 1 on the plates 2 according to the same index marked thereon is repeated, one divided core 300A_1 constituting the stator core 300A is manufactured. When divided cores 300A_1 and 300A_2 manufactured as described above are assembled in an annular shape, the stator core 300A is formed.

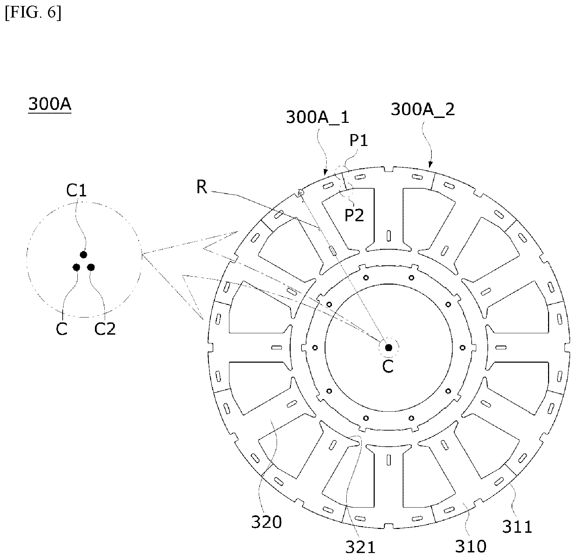

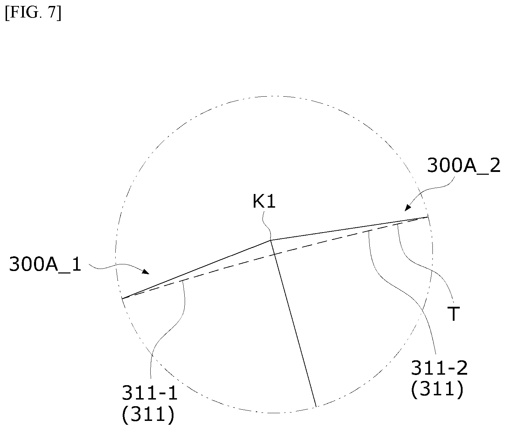

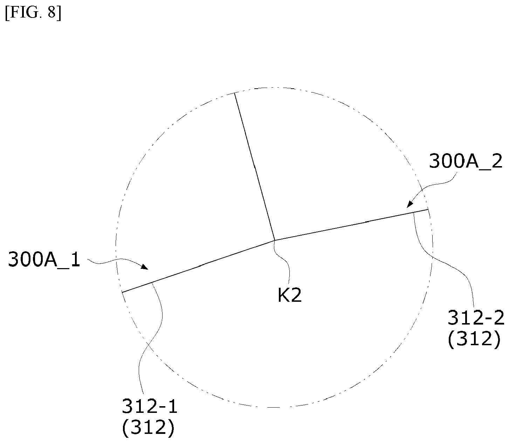

FIG. 6 is a plan view illustrating the stator core 300A, FIG. 7 is an enlarged view illustrating portion P1 of FIG. 6, and FIG. 8 is an enlarged view illustrating portion P2 of FIG. 6.

Referring to FIGS. 6 to 8, when the divided cores 300A_1 manufactured through the above-described process are assembled in the annular shape, one stator core 300A is completed. In this case, when the plurality of divided cores 300A_1 are viewed from above in a direction perpendicular to an axial direction, the divided cores 300A_1 include the plates 2 which are formed from the same board 1 and coplanar with each other. Accordingly, a deviation between open slots between the teeth 320 is very small.

Since the deviation between the open slots is negligible as described above, there is an advantage of significantly reducing a cogging torque.

In addition, there is an advantage of manufacturing the stator core 300A and the rotor core using one type of mold through which the stator core 300A and the rotor core may be manufactured from the board 1.

Structural features of the stator core 300A will be described below.

When the divided cores 300A_1 are assembled in the annular shape, both side surfaces of the yokes 310 of the divided cores 300A_1 and 300A_2 are in contact with each other. In this case, due to the gaps G formed in the board 1, since the divided cores 300A_1 are assembled in a circle which is smaller than the perfect circle, a curvature center of the outer surfaces 311 of the yokes 310 of the divided cores 300A_1 and a curvature center of the inner surface 321 of the teeth 320 is eccentrically disposed with respect to the axial center C.

In addition, curvature centers C1 and C2 of the outer surfaces 311 of the yokes 310 of the adjacent divided cores 300A_1 and 300A_2 may be different from each other. In addition, all of the curvature centers of the outer surfaces 311 of the yokes 310 of the divided cores 300A_1 constituting the stator core 300A may be different from each other. In addition, all curvature centers of the inner surfaces 321 of the teeth 320 of the divided cores 300A_1 constituting the stator core 300A may also be different from each other. In this case, curvatures of the outer surfaces 311 of the yokes 310 of the divided cores 300A_1 constituting the stator core 300A are the same. In addition, curvatures of the inner surfaces 321 of the teeth 320 of the divided cores 300A_1 constituting the stator core 300A are also the same. This is because the divided cores 300A_1 include the plates 2 which are formed from the same board 1 so that the plates 2 are coplanar with each other when viewed from above in the direction perpendicular to the axial direction.

The housing 500 will be described. A radius of curvature of the outer surface 311 of the yoke 310 of the divided core 300A_1 is greater than an inner radius of the housing 500. This is because the press machining process is performed on the board 1 based on a perfect circle having a radius greater than the inner radius of the housing.

In addition, referring to FIG. 7, when the divided cores 300A_1 are assembled in the annular shape, the outer surfaces 311 of the yokes 310 of the adjacent divided cores 300A_1 are connected to each other, and in this case, the outer surfaces 311 of the yokes 310 are intermittently connected. For example, a first corner K1 may be formed at a boundary portion of the outer surfaces 311 of the adjacent yokes 310.

In addition, a portion that protrudes further outward than a virtual perfect circle T having a radius R from the axial center C to the outer surfaces 311 of the yokes 310 may be disposed around a boundary of the outer surfaces 311 of the yokes 310.

In addition, referring to FIG. 8, when the divided cores 300A_1 are assembled in the annular shape, the inner surfaces 312 of the yokes 310 of the adjacent divided cores 300A_1 are connected to each other, and in this case, the inner surfaces 312 of the yokes 310 are intermittently connected. For example, a second corner K2 may be formed around the boundary portion of the outer surfaces 311 of the yokes 310.

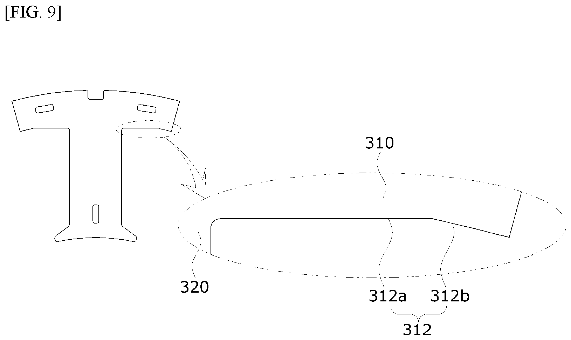

FIG. 9 is an enlarged view illustrating the inner surface 312 of the yoke 310.

Referring to FIG. 9, the inner surface 312 of the yokes 310 may include a first surface 312a and a second surface 312b distinguished in a circumferential direction of the stator 300. The second surface 312b may be disposed to be inclined with respect to the first surface 312a, and the first surface 312a and the second surface 312b may be flat surfaces. In this case, the first surface 312a may be a surface connected to the tooth 320. This is a structure for expanding an occupation space of the coil by reducing a width of the yoke in a radial direction toward both side surfaces of the yoke 310.

The motor according to the exemplary embodiment of the present invention has been described above with reference to the accompanying drawings.

The above description is only an example describing the technological scope of the present invention. Various changes, modifications, and replacements may be made by those skilled in the art without departing from the essential features of the present invention.

## Claims

1. A motor comprising:
a rotating shaft (100);
a rotor (200) coupled to the rotating shaft (100);
a plurality of stator cores (300A) disposed to correspond to the rotor (200); and
a housing (500) disposed outside the plurality of stator cores (300A);
wherein the plurality of stator cores (300A) include yokes (310) and teeth (320) protruding from the yokes, **characterized in that** curvature centers of outer surfaces (311) of the yokes (310) and curvature centers of inner surfaces (312) of the teeth (320) are eccentrically disposed with respect to a center of the stator (300),
outer surfaces of the adjacent yokes are intermittently connected, and inner surfaces of the adjacent yokes are intermittently connected,
wherein all curvatures of the outer surfaces of the plurality of yokes are the same and all curvatures of inner surfaces of the plurality of teeth are the same.

2. The motor of claim 1, wherein all curvature centers of the outer surfaces of the plurality of yokes (310) are different.

3. The motor of claim 1, wherein all curvature centers of inner surfaces of the plurality of the teeth (310) are different.

4. The motor of claim 1 wherein a radius of curvature of the outer surface of the yoke (310) is greater than an inner diameter of the housing (500).

5. The motor of claim 1, wherein:
an inner surface (312) of the yoke (310) includes a first surface (312a) and a second surface (312b) distinguished in a circumferential direction of the stator;
the second surface (312b) is obliquely disposed with respect to the first (312a); and
the first surface (312a) and the second surface (312b) are flat surfaces.

6. The motor of claim 1, wherein the stator core (300A) includes a portion protruding further than a perfect circle having a radius from an axial center to the outer surface of the yoke.

7. The motor of claim 1, wherein the outer surfaces (311) of the adjacent yokes (300A_1, 300A_2) constitute a first corner (K1).

8. The motor of claim 1, wherein the inner surfaces (312) of the adjacent yokes (300A_1, 300A_2) constitute a second corner (K2).

## Patentansprüche

1. Motor umfassend:
eine Drehwelle (100);
einen Rotor (200), der mit der Drehwelle (100) gekoppelt ist;
eine Vielzahl von Statorkernen (300A), die angeordnet sind, um dem Rotor (200) zu entsprechen; und
ein Gehäuse (500), das außerhalb der Vielzahl von Statorkernen (300A) angeordnet ist;
wobei die Vielzahl von Statorkernen (300A) Joche (310) und von den Jochen vorstehende Zähne (320) umfasst,
dadurch gekennzeichet, dass
Krümmungszentren von Außenoberflächen (311) der Joche (310) und Krümmungszentren von Innenoberflächen (312) der Zähne (320) in Bezug auf ein Zentrum des Stators (300) exzentrisch angeordnet sind,
Außenoberflächen der benachbarten Joche intermittierend verbunden sind, und
Innenoberflächen der benachbarten Joche intermittierend verbunden sind,
wobei alle Krümmungen der Außenoberflächen der Vielzahl von Jochen gleich sind und alle Krümmungen von Innenoberflächen der Vielzahl von Zähnen gleich sind.

2. Motor nach Anspruch 1, wobei alle Krümmungszentren der Außenoberflächen der Vielzahl von Jochen (310) unterschiedlich sind.

3. Motor nach Anspruch 1, wobei alle Krümmungszentren von Innenoberflächen der Vielzahl der Zähne (310) unterschiedlich sind.

4. Motor nach Anspruch 1, wobei ein Krümmungsradius der Außenoberfläche des Jochs (310) größer als ein Innendurchmesser des Gehäuses (500) ist.

5. Motor nach Anspruch 1, wobei:
eine Innenoberfläche (312) des Jochs (310) eine erste Oberfläche (312a) und eine zweite Oberfläche (312b) umfasst, die in einer Umfangsrichtung des Stators differenziert ist;
die zweite Oberfläche (312b) in Bezug auf die erste (312a) schräg angeordnet ist; und
die erste Oberfläche (312a) und die zweite Oberfläche (312b) flache Oberflächen sind.

6. Motor nach Anspruch 1, wobei der Statorkern (300A) einen Abschnitt umfasst, der weiter als ein perfekter Kreis vorsteht, der einen Radius von einem Axialzentrum zur Außenoberfläche des Jochs aufweist.

7. Motor nach Anspruch 1, wobei die Außenoberflächen (311) der benachbarten Joche (300A_1, 300A_2) eine erste Ecke (K1) darstellen.

8. Motor nach Anspruch 1, wobei die Innenoberflächen (312) der benachbarten Joche (300A_1, 300A_2) eine zweite Ecke (K2) darstellen.

## Revendications

1. Un moteur comprenant :
un arbre rotatif (100) ;
un rotor (200) relié à l'arbre rotatif (100) ;
une pluralité de noyaux de stator (300A) disposés de façon à correspondre au rotor (200) ; et
un boîtier (500) disposé à l'extérieur de la pluralité de noyaux de stator (300A) ;
la pluralité de noyaux de stator (300A) comprenant des culasses (310) et des dents (320) faisant saillie des culasses, **caractérisé en ce que**
des centres de courbure de surfaces extérieures (311) des culasses (310) et des centres de courbure de surfaces intérieures (312) des dents (320) étant disposés de manière excentrique par rapport à un centre du stator (300),
les surfaces extérieures des culasses adjacentes sont reliées de façon intermittente, et
les surfaces intérieures des culasses adjacentes sont reliées de façon intermittente,
toutes les courbures des surfaces extérieures de la pluralité de culasses étant les mêmes et toutes les courbures des surfaces intérieures de la pluralité de dents étant les mêmes.

2. Le moteur selon la revendication 1, dans lequel tous les centres de courbure des surfaces extérieures de la pluralité de culasses (310) sont différents.

3. Le moteur selon la revendication 1, dans lequel tous les centres de courbure des surfaces internes de la pluralité de dents (310) sont différents.

4. Le moteur selon la revendication 1, dans lequel un rayon de courbure de la surface extérieure de la culasse (310) est supérieur au diamètre intérieur du boîtier (500).

5. Le moteur selon la revendication 1, dans lequel :
une surface interne (312) de la culasse (310) comprend une première surface (312a) et une deuxième surface (312b) distinguées dans une direction circonférentielle du stator ;
la deuxième surface (312b) est disposée obliquement par rapport à la première (312a) ; et
la première surface (312a) et la deuxième surface (312b) sont des surfaces planes.

6. Le moteur selon la revendication 1, dans lequel le noyau de stator (300A) comprend une partie faisant saillie au-delà d'un cercle parfait ayant un rayon allant d'un centre axial à la surface extérieure de la culasse.

7. Le moteur selon la revendication 1, dans lequel les surfaces extérieures (311) des culasses adjacentes (300A_1, 300A_2) constituent un premier coin (K1).

8. Le moteur selon la revendication 1, dans lequel les surfaces intérieures (312) des culasses adjacentes (300A_1, 300A_2) constituent un deuxième coin (K2).
